# EUROPEAN PATENT APPLICATION

(11) **EP 4 001 044 A2**
(43) Date of publication of application: **25.05.2022**
(21) Application number: 21203228.8
(22) Date of filing: 18.10.2021
(51) Int. Cl.: B60W 60/00, B60W 50/14, B60W 30/18

(54) **INCREASING AWARENESS OF PASSENGERS DURING PULLOVERS AND DROP OFFS FOR AUTONOMOUS VEHICLES**

(30) Priority: 29.10.2020 US 202063106971 P; 16.08.2021 US 202117402879
(71) Applicant: Waymo LLC, Mountain View, CA 94043 (US)
(72) Inventor: Moon, Maria, Mountain View, 94043 (US); Kansara, Samrat, Mountain View, 94043 (US); Gutlansky, Daniella, Mountain View, 94043 (US); Smith, Orlee, Mountain View, 94043 (US); Bechtel, Kyle, Mountain View, 94043 (US)
(74) Representative: Chettle, John Edward

(57) **Abstract**

The disclosure relates to controlling a vehicle having an autonomous driving mode. An example method may include identifying a pullover location for the vehicle. As the vehicle approaches the pullover location, information identifying one or more road users may be received. A behavior prediction for each of the one or more road users may be received. One of one of the one or more road users may be identified based on the received behavior predictions for each of the one or more road users and a collision zone for the vehicle. After waiting for the identified one to pass the vehicle, the vehicle may be maneuvered in the autonomous driving mode into the pullover location.

## Description

### CROSS REFERENCE TO RELATED APPLICATIONS

The present application claims the benefit of U.S. Provisional Application No. 63/106,971, filed October 29, 2020, the entire disclosure of which is incorporated herein by reference.

### BACKGROUND

Autonomous vehicles, such as vehicles that do not require a human driver, can be used to aid in the transport of passengers or items from one location to another. Such vehicles may operate in a fully autonomous mode where users may provide some initial input, such as a pickup or destination location, and the vehicle maneuvers itself to that location.

When a person (or user) wants to be physically transported and/or to transport goods between two locations via a vehicle, they may use any number of taxi or delivery services. To date, these services typically involve a human driver who is given dispatch instructions to a location to pick up and drop off the user and/or goods. Generally these locations are worked out via physical signals (i.e. flagging down the driver), a phone call where the user explains where he or she actually is, or an in-person discussion between the driver and user. In the case of an autonomous vehicle, such coordination is often difficult or impossible to achieve and may lead to significant inconvenience to the user in terms of the distance to reach a vehicle or desired destination where the vehicle stops to pick up or drop off a passenger and/or goods.

### BRIEF SUMMARY

Aspects of the disclosure provide a method of maneuvering a vehicle having an autonomous driving mode. The method includes identifying, by one or more processors of the vehicle, a pullover location for the vehicle; as the vehicle approaches the pullover location, receiving, by the one or more processors of the vehicle, information identifying one or more road users; receiving, by the one or more processors of the vehicle, a behavior prediction for each of the one or more road users; identifying, by the one or more processors of the vehicle, one of one of the one or more road users based on the received behavior predictions for each of the one or more road users and a collision zone for the vehicle; waiting, by the one or more processors of the vehicle, for the identified one to pass the vehicle; and after waiting for the identified one to pass the vehicle, maneuvering, by the one or more processors of the vehicle, the vehicle in the autonomous driving mode into the pullover location.

In one example, identifying the one or more road users includes determining whether the received behavior predictions for each of the one or more road users intersects with the collision zone. In another example, the collision zone includes an area around the vehicle having an oval shape. In another example, the method also includes providing a notification on a display of the vehicle indicating that the vehicle is waiting for the identified one to pass the vehicle. In this example, the method also includes providing the notification with a visualization including a background scene, a representation of the vehicle and a representation of the identified one. In this example, the representation of the identified one is displayed with a visual treatment that allows the representation of the identified one to stand out from a background scene.

In another example, the method also includes, after maneuvering the vehicle into the pullover location, displaying a notification on a display of the vehicle indicating that the passenger can exit the vehicle. In another example, the method also includes after the vehicle is maneuvered into the pullover location: receiving information identifying one or more second road users; receiving, by the one or more processors of the vehicle, a behavior prediction for the one or more second road users; identifying, by the one or more processors of the vehicle, one of the one or more second road users based on the received behavior predictions for each of the one or more second road users and the collision zone; waiting, by the one or more processors of the vehicle, for the identified one of the one or more second road users to pass the vehicle; and after waiting for the identified one of the one or more second road users to pass the vehicle, unlocking a door of the vehicle. In this example, the method also includes in addition to unlocking the door, opening the door.

In another example, the method also includes after the vehicle is maneuvered into the pullover location: receiving information identifying one or more second road users; receiving, by the one or more processors of the vehicle, a behavior prediction for the one or more second road users; identifying, by the one or more processors of the vehicle, one of the one or more second road users based on the received behavior predictions for each of the one or more second road users and the collision zone; waiting, by the one or more processors of the vehicle, a predetermined period of time; and after waiting the predetermined period of time, unlocking a door of the vehicle. In this example, the method also includes, in addition to unlocking the door, opening the door.

In another example, the method also includes, after maneuvering the vehicle into the pullover location, unlocking a door of the vehicle. In this example, the method also includes, after unlocking the door: receiving information identifying one or more second road users; receiving, by the one or more processors of the vehicle, a behavior prediction for the one or more second road users; identifying, by the one or more processors of the vehicle, one of the one or more second road users based on the received behavior predictions for each of the one or more second road users and the collision; and in response to the identifying the one of the one or more second road users, providing a notification on a display of the vehicle in order to encourage the passenger to look around for road users when exiting the vehicle. In this example, the notification includes an animation that sweeps 360 degrees around a representation of the vehicle. In addition or alternatively, the notification suggests that road users can be located at any point around the vehicle as the passenger exits. In addition or alternatively, the notification avoids suggesting any specific directionality to the passenger. In another example, the notification further indicates that perception of the vehicle is partially occluded by an object. In another example, the method also includes determining whether the identified one of the one or more of the second road users is a false positive detection, and providing the notification is further based on the determination of whether the identified one of the one or more of the second road users is a false positive detection.

In addition or alternatively, the method also includes, after unlocking the door: receiving information identifying one or more second road users; receiving, by the one or more processors of the vehicle, a behavior prediction for the one or more second road users; identifying, by the one or more processors of the vehicle, one of the one or more second road users based on the received behavior predictions for each of the one or more second road users and the collision zone; and in response to the identifying the one of the one or more second road users, providing a notification on a display of the vehicle in order to identify the one of the one or more second road users to the passenger. In addition or alternatively, the notification includes a representation of the one of the one or more second road users with a visual treatment in order to focus attention of the passenger on the one of the one or more second road users. In addition, the visual treatment centers a visualization of a scene around the representation of the one of the one or more second road users. In addition or alternatively, the visual treatment includes displaying the representation of the one of the one or more second road users within a circular bright spot.

A further aspect of the disclosure provides method of providing notifications to passengers of a vehicle having an autonomous driving mode. The method includes identifying, by one or more processors, a pullover location; maneuvering, by the one or more processors, the vehicle in the autonomous driving mode to the pullover location; receiving, by the one or more processors, information identifying one or more road users; receiving, by the one or more processors of the vehicle, a behavior prediction for the one or more road users; identifying, by the one or more processors, one of the one or more road users based on the received behavior predictions for each of the one or more road users and a collision zone for the vehicle; determining, by the one or more processors, whether the identified one of the one or more road users is a false positive; and based on the determination of whether the identified one of the one or more road users is a false positive, providing, by the one or more processors, a notification for display to a passenger of the vehicle.

In one example, the notification is provided as the vehicle is transitioned to a park mode while stopped. In another example, the notification is provided after the vehicle is transitioned to a park mode while stopped. In another example, the notification is provided with an audible notification, and the method further comprises determining a volume of the audible notification based on a location of the identified one of the one or more road users. In another example, the notification includes an animation that sweeps 360 degrees around a representation of the vehicle. In another example, the notification suggests that road users can be located at any point around the vehicle as the passenger exits. In another example, the notification avoids suggesting any specific directionality to the passenger. In another example, the method also includes determining a size of the notification with respect to a display based on a trip status of the vehicle, such that the size of the notification is larger at the end of a trip than at the beginning of a trip. In another example, the notification is provided with an audible notification, and the method further comprises determining a volume of an audible notification based on a trip status of the vehicle, such that the volume is higher at the end of a trip than at the beginning of a trip. In another example, when the vehicle is stopping temporarily, the notification may further discourage the passenger from exiting the vehicle for safety reasons.

### BRIEF DESCRIPTION OF THE DRAWINGS

FIGURE 1 is a functional diagram of an example vehicle in accordance with an exemplary embodiment.
FIGURE 2 is an example of map information in accordance with aspects of the disclosure.
FIGURE 3 is an example external view of a vehicle in accordance with aspects of the disclosure.
FIGURE 4 is a pictorial diagram of an example system in accordance with aspects of the disclosure.
FIGURE 5 is a functional diagram of the system of FIGURE 4 in accordance with aspects of the disclosure.
FIGURE 6 is an example view of a roadway, an autonomous vehicle, and a road user in accordance with aspects of the disclosure.
FIGURE 7 is an example view of a roadway, an autonomous vehicle, a road user and a predicted trajectory in accordance with aspects of the disclosure.
FIGURES 8A and 8B are example views of a roadway, an autonomous vehicle, a road user, a predicted trajectory, and a collision zone in accordance with aspects of the disclosure.
FIGURE 9 is another example view of a roadway, an autonomous vehicle, and a road user in accordance with aspects of the disclosure.
FIGURE 10 is an example visualization in accordance with aspects of the disclosure.
FIGURES 11A and 11B are example visualizations in accordance with aspects of the disclosure.
FIGURE 12 is an example visualization in accordance with aspects of the disclosure.
FIGURE 13 is an example flow diagram in accordance with aspects of the disclosure.
FIGURE 14 is another example flow diagram in accordance with aspects of the disclosure.

### DETAILED DESCRIPTION

### OVERVIEW

The disclosure relates to avoiding collisions with road users when pulling over and dropping off passengers riding in autonomous vehicles. Exiting a vehicle, especially in dense urban areas, can be difficult for passengers may be distracted, disoriented, or unaware of their surroundings, and especially for passengers with vision, hearing, or cognitive disabilities. Outside of the vehicle, other road users such as bicyclists, scooters, skateboarders, pedestrians, etc. may be approaching the vehicle quickly and unaware that a passenger is about to exit. As a result, there is the risk of collision. For instance, passengers may unknowingly open doors into passing road users causing collisions which can result in serious or even fatal injuries. As more and more transportation services which utilize autonomous vehicles begin to operate in urban areas which are increasingly adding bicycle lanes and walking paths, the likelihood and number of collisions may be expected to increase.

During a drop off, drivers of vehicles or autonomous vehicles may use turn signals to indicate that it is pulling over, and may turn on hazard lights while parked. These lights may indicate the intention of the driver or vehicle and draw attention to it, alerting oncoming road users to use caution. While turn signals and hazard lights provide some indication to road users, it still may not be clear that a passenger is exiting and an out swinging door may be unexpected. In some instances, drivers may be able to warn passengers of such road users, and some passengers may look outside of windows of the vehicle or if available, a three-dimensional scene presented on a display of a vehicle. Passengers who are unable to see or unsure of their surroundings, can ask the driver for assistance or a remote assistance agent (in the case of an autonomous vehicle) who can then access an autonomous vehicle's camera feed to provide some orientation to the passenger. However, not all passengers may be so careful and drivers and remote assistance agents may make mistakes or not have all information available to them. Thus, even with these tools, there may still be collisions.

Because the perception system of autonomous vehicles may detect objects in various directions around the vehicles and predict the future behaviors of these objects, the vehicle's computing devices readily have the information available to avoid such collisions and to provide notifications to passengers that will help them safely enter and exit the vehicle. In order to do so, a pullover location for an autonomous vehicle may be identified. The vehicle's computing devices identify a stopping location proximate to the destination, for instance, in order to pick up, drop off, or simply park the vehicle 100. As the vehicle approaches the pullover location, information identifying one or more road users may be received. For instance, in order to pull the vehicle over safely, the vehicle's perception system may detect and identify objects including other road users such as bicyclists, people on scooters, pedestrians, etc. which may be approaching the vehicle.

A behavior prediction for the one or more road users may be received. One of the one or more road users is identified based on the received behavior predictions for each of the one or more road users and a collision zone for the vehicle. The computing devices may then determine whether the predicted trajectory of the road user enters a collision zone of the vehicle. After waiting for the identified one to pass the vehicle, the vehicle may be maneuvered into the pullover location. In conjunction with waiting for the road user to pass by the vehicle, information may be displayed to any passengers within the vehicle in order to allow such passengers to understand the delay as well as to reduce confusion of passengers who might misunderstand the autonomous vehicle's stop as a signal that it is safe to exit. Once any road users who are detected approaching the vehicle and have predicted trajectories that are within the collision zone, the computing devices may pull the vehicle over into a parking spot and automatically unlock and/or open one or more doors of the vehicle.

Of course, even after the computing devices have pulled the vehicle over, the perception system may continue to detect and identify objects. As such, the computing devices may continue to determine whether any identified road users are detected approaching the vehicle and have predicted trajectories that are within the collision zone. If such road users are detected, the computing devices may delay unlocking and/or opening the vehicle's doors for a predetermined period of time or until the road users have passed the vehicle.

After the doors have been unlocked, the perception system may continue to detect and identify objects. As such, the computing devices may continue to determine whether any identified road users are detected approaching the vehicle and have predicted trajectories that are within the collision zone. If no such road users are identified, a notification may be displayed that encourages the passenger to look around for other road users when exiting the vehicle. If such road users are identified, a notification may be displayed that indicates that there are other road users proximate to the vehicle and also encourages the passenger to look around for other road users when exiting the vehicle. Alternatively, if such road users are identified, a notification may encourage the passenger to wait before exiting the vehicle and also indicate the reason why. In such instances, other types of visual treatments with or without additional audio cues may be used to focus the passenger's attention on the identified road user.

The features described herein may provide a useful and practical way to avoid collisions caused by vehicles pulling over and passengers exiting those vehicles. By limiting notifications to only those road users that are relevant to the collision zone, this reduces the likelihood of "oversaturation" caused by irrelevant notifications which may reduce the likelihood of passengers adhering to these notifications. As such, the notifications provided may raise the awareness of passengers as they exit the vehicle while at the same time minimizing the need for alarming or disconcerting notifications. This, in turn, may improve the perception of the transportation service by passengers who are able to trust that the vehicles are operating safely and looking out for road users.

### EXAMPLE SYSTEMS

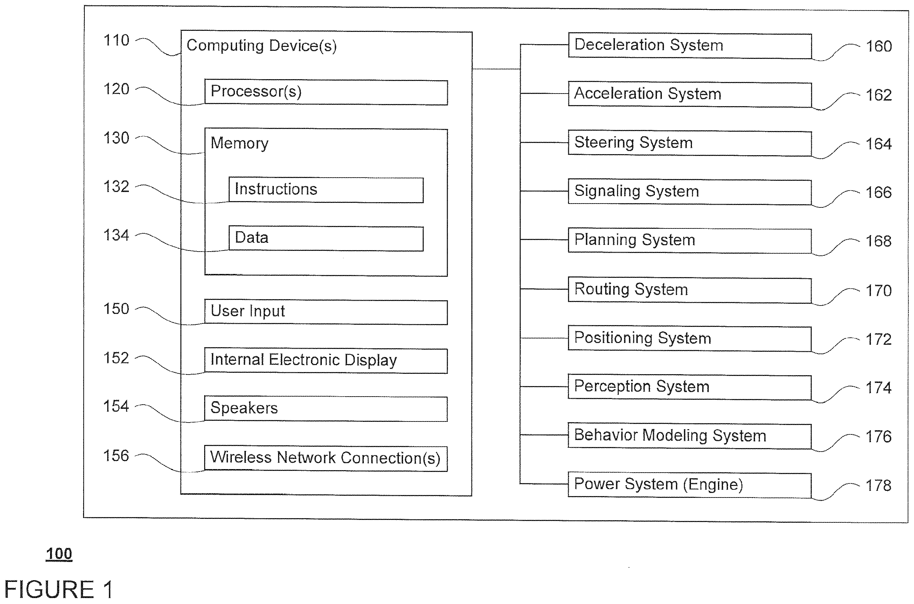

As shown in FIGURE 1, a vehicle 100 in accordance with one aspect of the disclosure includes various components. While certain aspects of the disclosure are particularly useful in connection with specific types of vehicles, the vehicle may be any type of vehicle including, but not limited to, cars, trucks, motorcycles, buses, recreational vehicles, etc. The vehicle may have one or more computing devices, such as computing devices 110 containing one or more processors 120, memory 130 and other components typically present in general purpose computing devices.

The memory 130 stores information accessible by the one or more processors 120, including instructions 134 and data 132 that may be executed or otherwise used by the processor 120. The memory 130 may be of any type capable of storing information accessible by the processor, including a computing device-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

The instructions 134 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. Functions, methods and routines of the instructions are explained in more detail below.

The data 132 may be retrieved, stored or modified by processor 120 in accordance with the instructions 134. For instance, although the claimed subject matter is not limited by any particular data structure, the data may be stored in computing device registers, in a relational database as a table having a plurality of different fields and records, XML documents or flat files. The data may also be formatted in any computing device-readable format.

The one or more processor 120 may be any conventional processors, such as commercially available CPUs or GPUs. Alternatively, the one or more processors may be a dedicated device such as an ASIC or other hardware-based processor. Although FIGURE 1 functionally illustrates the processor, memory, and other elements of computing devices 110 as being within the same block, it will be understood by those of ordinary skill in the art that the processor, computing device, or memory may actually include multiple processors, computing devices, or memories that may or may not be stored within the same physical housing. For example, memory may be a hard drive or other storage media located in a housing different from that of computing devices 110. Accordingly, references to a processor or computing device will be understood to include references to a collection of processors or computing devices or memories that may or may not operate in parallel.

Computing devices 110 may include all of the components normally used in connection with a computing device such as the processor and memory described above as well as a user input 150 (e.g., a mouse, keyboard, touch screen and/or microphone), various electronic displays (e.g., a monitor having a screen or any other electrical device that is operable to display information), and speakers 154 to provide information to a passenger of the vehicle 100 as needed. For example, display 152 may be located within a cabin of vehicle 100 and may be used by computing devices 11auto0 to provide information to passengers within vehicle 100.

Computing devices 110 may also include one or more wireless network connections 156 to facilitate communication with other computing devices, such as the client computing devices and server computing devices described in detail below. The wireless network connections may include short range communication protocols such as Bluetooth, Bluetooth low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

The computing devices 110 may function as an autonomous control system in order to control the vehicle in an autonomous driving mode. For example, returning to FIGURE 1, the computing devices 110 may be in communication with various systems of vehicle 100, such as deceleration system 160, acceleration system 162, steering system 164, routing system 166, planning system 168, positioning system 170, and perception system 172 in order to control the movement, speed, etc. of vehicle 100 in accordance with the instructions 134 of memory 130 in the autonomous driving mode.

As an example, computing devices 110 may interact with deceleration system 160 and acceleration system 162 in order to control the speed of the vehicle. Similarly, steering system 164 may be used by computing devices 110 in order to control the direction of vehicle 100. For example, if vehicle 100 is configured for use on a road, such as a car or truck, the steering system may include components to control the angle of wheels to turn the vehicle. The computing devices 110 may also use the signaling system in order to signal the vehicle's intent to other drivers or vehicles, for example, by lighting turn signals or brake lights when needed.

Routing system 166 may be used by the computing devices 110 in order to generate a route to a destination. Planning system 168 may be used by computing devices 110 in order to follow the route. In this regard, the planning system 168 and/or routing system 166 may store detailed map information, e.g., highly detailed maps identifying a road network including the shape and elevation of roadways, lane lines, intersections, crosswalks, speed limits, traffic signals, buildings, signs, real time traffic information, pullover spots, vegetation, or other such objects and information.

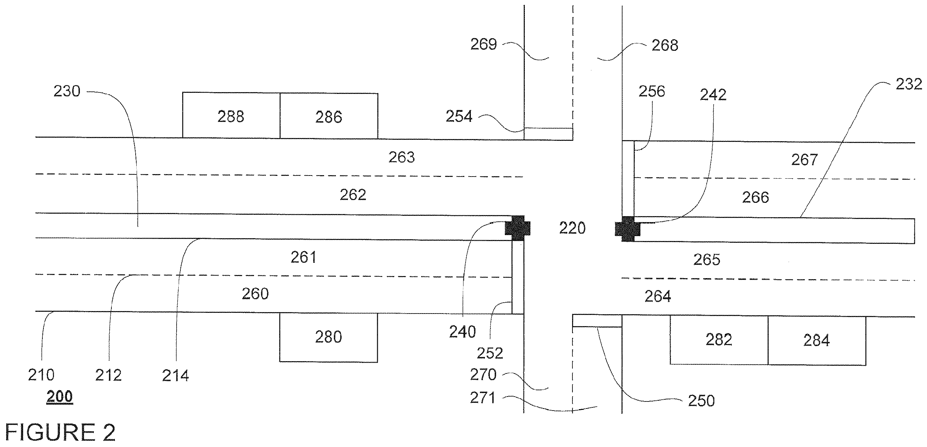

FIGURE 2 is an example of map information 200 for a section of roadway including intersection 220. FIGURE 2 depicts a portion of the map information that includes information identifying the shape, location, and other characteristics of lane markers or lane lines 210, 212, 214, median areas 230, 232, traffic signals 240, 242, as well as stop lines 250, 252, 254, 256. The lane lines may also define various lanes 260-271 or these lanes may also be explicitly identified in the map information 200. In addition to these features, the map information may also include information that identifies the direction of traffic and speed limits for each lane as well as information that allows the computing devices 110 to determine whether the vehicle has the right of way to complete a particular maneuver (i.e. complete a turn or cross a lane of traffic or intersection), as well as other features such as curbs, buildings, waterways, vegetation, signs, etc.

The map information may also store predetermined stopping locations including pickup locations and drop off locations. Pickup locations may refer to locations where the autonomous vehicle stops to wait to pick up a passenger for a trip. Drop off locations may refer to locations where the autonomous vehicle stops to allow for a passenger to exit the vehicle after a trip. Other stopping locations, such as those stopping locations where the vehicle may stop, allow the passenger to exit and wait for the passenger to return to the vehicle, are also possible. Stopping locations may also be used by the vehicle to stop and wait for a user to pick up or drop off goods. For instance, if the vehicle is delivering food to a user, the vehicle may stop and wait in a stopping location. Each of these may simply be parking locations that are discrete, predetermined pickup and drop off locations, and in some instances, hand-selected by a human operator or learned by a computing device over time. In this regard, each stopping location may be a location where a vehicle could stop selected through some manual or automated analysis of the characteristics of each location. As shown in FIGURE 2, the map information includes a plurality of stopping locations 280-288. In this example, each stopping location corresponds to a parking spot adjacent to a lane, but these predetermined stopping locations can be all types of parking locations.

Although the map information is depicted herein as an image-based map, the map information need not be entirely image based (for example, raster). For instance, the map information may include one or more roadgraphs, graph networks or road networks of information such as roads, lanes, intersections, and the connections between these features which may be represented by road segments. Each feature in the map may also be stored as graph data and may be associated with information such as a geographic location and whether or not it is linked to other related features, for example, a stop sign may be linked to a road and an intersection, etc. In some examples, the associated data may include grid-based indices of a road network to allow for efficient lookup of certain road network features.

In this regard, in addition to the aforementioned physical feature information, the map information may include a plurality of graph nodes and edges representing road or lane segments that together make up the road network of the map information. Each edge is defined by a starting graph node having a specific geographic location (e.g. latitude, longitude, altitude, etc.), an ending graph node having a specific geographic location (e.g. latitude, longitude, altitude, etc.), and a direction. This direction may refer to a direction the vehicle 100 must be moving in in order to follow the edge (i.e. a direction of traffic flow). The graph nodes may be located at fixed or variable distances. For instance, the spacing of the graph nodes may range from a few centimeters to a few meters and may correspond to the speed limit of a road on which the graph node is located. In this regard, greater speeds may correspond to greater distances between graph nodes. The edges may represent driving along the same lane or changing lanes. Each node and edge may have a unique identifier, such as a latitude and longitude location of the node or starting and ending locations or nodes of an edge. In addition to nodes and edges, the map may identify additional information such as types of maneuvers required at different edges as well as which lanes are drivable.

The routing system 166 may use the map information 200 to determine a route from a current location (e.g. a location of a current node) to a destination. Routes may be generated using a cost-based analysis which attempts to select a route to the destination with the lowest cost. Costs may be assessed in any number of ways such as time to the destination, distance traveled (each edge may be associated with a cost to traverse that edge), types of maneuvers required, convenience to passengers or the vehicle, etc. Each route may include a list of a plurality of nodes and edges which the vehicle can use to reach the destination. Routes may be recomputed periodically as the vehicle travels to the destination.

The map information used for routing may be the same or a different map as that used for planning trajectories. For example, the map information used for planning routes not only requires information on individual lanes, but also the nature of lane boundaries (e.g., solid white, dash white, solid yellow, etc.) to determine where lane changes are allowed. However, unlike the map used for planning trajectories, the map information used for routing need not include other details such as the locations of crosswalks, traffic lights, stop signs, etc., though some of this information may be useful for routing purposes. For example, between a route with a large number of intersections with traffic controls (such as stop signs or traffic signal lights) versus one with no or very few traffic controls, the latter route may have a lower cost (e.g. because it is faster) and therefore be preferable.

Positioning system 170 may be used by computing devices 110 in order to determine the vehicle's relative or absolute position on a map or on the earth. For example, the position system 170 may include a GPS receiver to determine the device's latitude, longitude and/or altitude position. Other location systems such as laser-based localization systems, inertial-aided GPS, or camera-based localization may also be used to identify the location of the vehicle. The location of the vehicle may include an absolute geographical location, such as latitude, longitude, and altitude, a location of a node or edge of the roadgraph as well as relative location information, such as location relative to other cars immediately around it which can often be determined with less noise that absolute geographical location.

The positioning system 170 may also include other devices in communication with the computing devices computing devices 110, such as an accelerometer, gyroscope or another direction/speed detection device to determine the direction and speed of the vehicle or changes thereto. By way of example only, an acceleration device may determine its pitch, yaw or roll (or changes thereto) relative to the direction of gravity or a plane perpendicular thereto. The device may also track increases or decreases in speed and the direction of such changes. The device's provision of location and orientation data as set forth herein may be provided automatically to the computing devices 110, other computing devices and combinations of the foregoing.

The perception system 172 also includes one or more components for detecting objects external to the vehicle such as other vehicles, obstacles in the roadway, traffic signals, signs, trees, etc. For example, the perception system 172 may include lasers, sonar, radar, cameras and/or any other detection devices that record data which may be processed by the computing devices of the computing devices 110. In the case where the vehicle is a passenger vehicle such as a minivan, the minivan may include a laser or other sensors mounted on the roof or other convenient location.

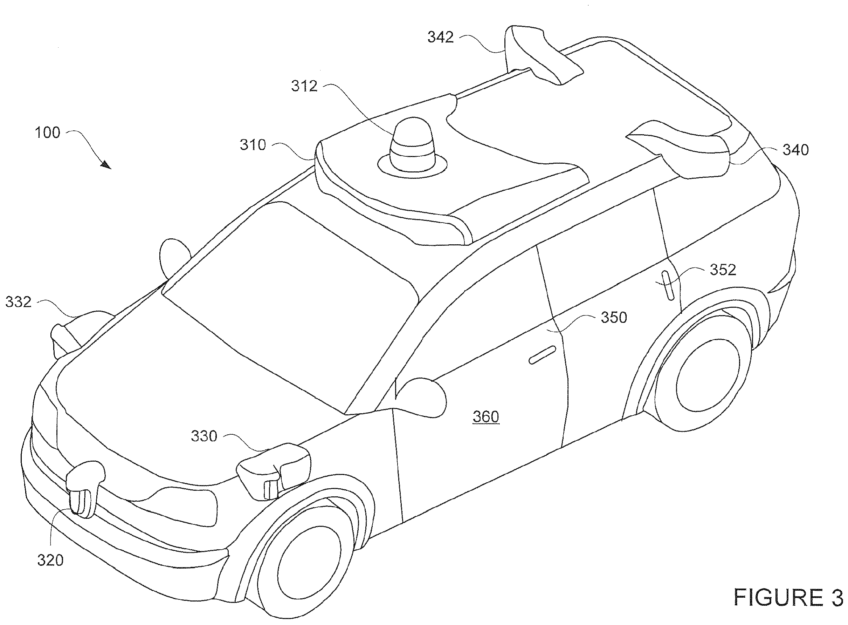

For instance, FIGURE 3 is an example external view of vehicle 100. In this example, roof-top housing 310 and dome housing 312 may include a LIDAR sensor as well as various cameras and radar units. In addition, housing 320 located at the front end of vehicle 100 and housings 330, 332 on the driver's and passenger's sides of the vehicle may each store a LIDAR sensor. For example, housing 330 is located in front of driver door 360. Vehicle 100 also includes housings 340, 342 for radar units and/or cameras also located on the roof of vehicle 100. Additional radar units and cameras (not shown) may be located at the front and rear ends of vehicle 100 and/or on other positions along the roof or roof-top housing 310.

The computing devices 110 may be capable of communicating with various components of the vehicle in order to control the movement of vehicle 100 according to primary vehicle control code of memory of the computing devices 110. For example, returning to FIGURE 1, the computing devices 110 may include various computing devices in communication with various systems of vehicle 100, such as deceleration system 160, acceleration system 162, steering system 164, routing system 166, planning system 168, positioning system 170, perception system 172, and power system 178 (i.e. the vehicle's engine or motor) in order to control the movement, speed, etc. of vehicle 100 in accordance with the instructions 134 of memory 130.

The various systems of the vehicle may function using autonomous vehicle control software in order to determine how to and to control the vehicle. As an example, a perception system software module of the perception system 172 may use sensor data generated by one or more sensors of an autonomous vehicle, such as cameras, LIDAR sensors, radar units, sonar units, etc., to detect and identify objects and their characteristics. These characteristics may include location, type, heading, orientation, speed, acceleration, change in acceleration, size, shape, etc. In some instances, characteristics may be input into a behavior prediction system software module which uses various behavior models based on object type to output a predicted future behavior for a detected object. In other instances, the characteristics may be put into one or more detection system software modules, such as a traffic light detection system software module configured to detect the states of known traffic signals, construction zone detection system software module configured to detect construction zones from sensor data generated by the one or more sensors of the vehicle as well as an emergency vehicle detection system configured to detect emergency vehicles from sensor data generated by sensors of the vehicle. Each of these detection system software modules may use various models to output a likelihood of a construction zone or an object being an emergency vehicle. Detected objects, predicted future behaviors, various likelihoods from detection system software modules, the map information identifying the vehicle's environment, position information from the positioning system 170 identifying the location and orientation of the vehicle, a destination location or node for the vehicle as well as feedback from various other systems of the vehicle may be input into a planning system software module of the planning system 168. The planning system 168 may use this input to generate trajectories for the vehicle to follow for some brief period of time into the future based on a route generated by a routing module of the routing system 166. In this regard, the trajectories may define the specific characteristics of acceleration, deceleration, speed, etc. to allow the vehicle to follow the route towards reaching a destination. A control system software module of the computing devices 110 may be configured to control movement of the vehicle, for instance by controlling braking, acceleration and steering of the vehicle, in order to follow a trajectory.

The computing devices 110 may control the vehicle in an autonomous driving mode by controlling various components. For instance, by way of example, the computing devices 110 may navigate the vehicle to a destination location completely autonomously using data from the detailed map information and planning system 168. The computing devices 110 may use the positioning system 170 to determine the vehicle's location and perception system 172 to detect and respond to objects when needed to reach the location safely. Again, in order to do so, computing devices 110 and/or planning system 168 may generate trajectories and cause the vehicle to follow these trajectories, for instance, by causing the vehicle to accelerate (e.g., by supplying fuel or other energy to the engine or power system 178 by acceleration system 162), decelerate (e.g., by decreasing the fuel supplied to the engine or power system 178, changing gears, and/or by applying brakes by deceleration system 160), change direction (e.g., by turning the front or rear wheels of vehicle 100 by steering system 164), and signal such changes (e.g., by lighting turn signals). Thus, the acceleration system 162 and deceleration system 160 may be a part of a drivetrain that includes various components between an engine of the vehicle and the wheels of the vehicle. Again, by controlling these systems, the computing devices 110 may also control the drivetrain of the vehicle in order to maneuver the vehicle autonomously.

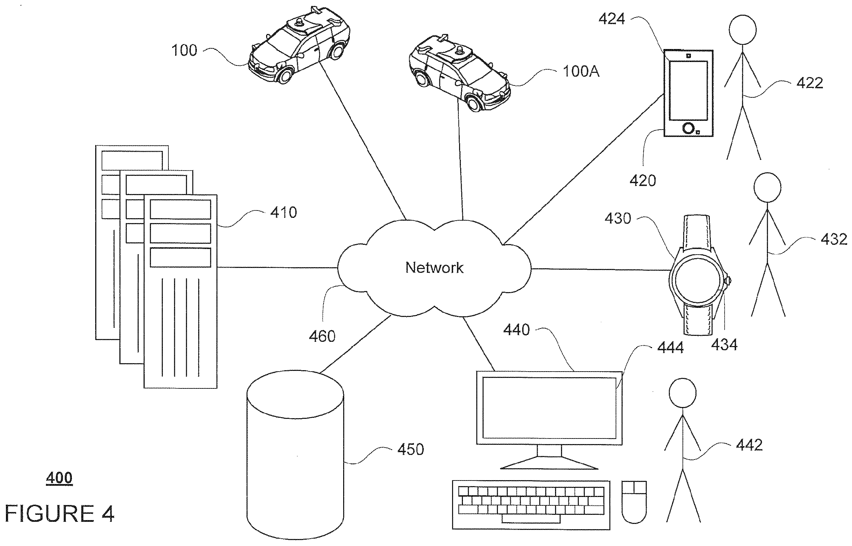

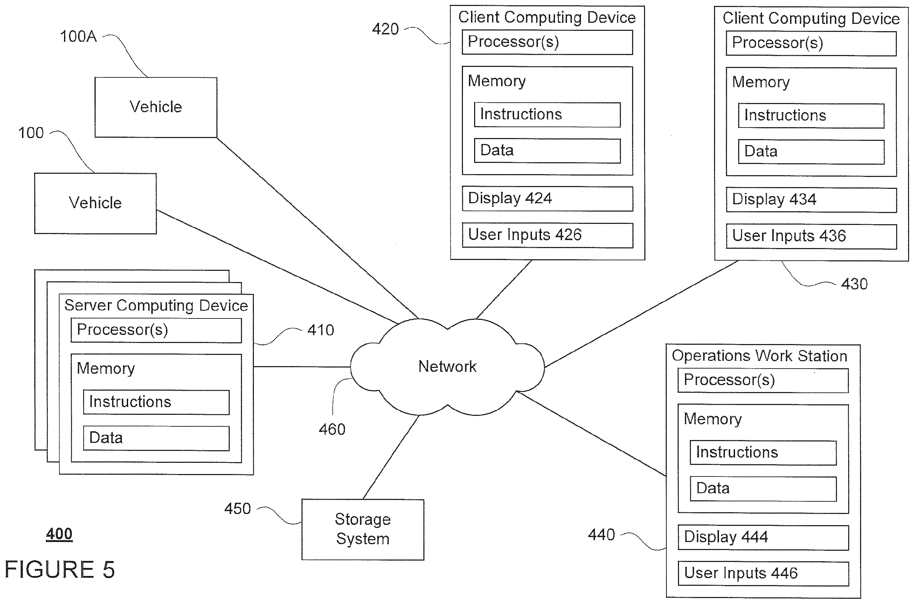

The computing devices 110 of vehicle 100 may also receive or transfer information to and from other computing devices, such as those computing devices that are a part of the transportation service as well as other computing devices. FIGURES 4 and 5 are pictorial and functional diagrams, respectively, of an example system 400 that includes a plurality of computing devices 410, 420, 430, 440 and a storage system 450 connected via a network 460. System 400 also includes vehicle 100 and vehicle 100A, which may be configured the same as or similarly to vehicle 100. Although only a few vehicles and computing devices are depicted for simplicity, a typical system may include significantly more.

As shown in FIGURE 5, each of computing devices 410, 420, 430, 440 may include one or more processors, memory, data and instructions. Such processors, memories, data and instructions may be configured similarly to one or more processors 120, memory 130, data 132, and instructions 134 of computing devices 110.

The network 460, and intervening graph nodes, may include various configurations and protocols including short range communication protocols such as Bluetooth, Bluetooth LE, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

In one example, one or more computing devices 410 may include one or more server computing devices having a plurality of computing devices, e.g., a load balanced server farm, that exchange information with different nodes of a network for the purpose of receiving, processing and transmitting the data to and from other computing devices. For instance, one or more computing devices 410 may include one or more server computing devices that are capable of communicating with computing devices 110 of vehicle 100 or a similar computing device of vehicle 100A as well as computing devices 420, 430, 440 via the network 460. For example, vehicles 100, 100A, may be a part of a fleet of vehicles that can be dispatched by server computing devices to various locations. In this regard, the server computing devices 410 may function as a dispatching server computing system which can be used to dispatch vehicles such as vehicle 100 and vehicle 100A to different locations in order to pick up and drop off passengers. In addition, server computing devices 410 may use network 460 to transmit and present information to a user, such as user 422, 432, 442 on a display, such as displays 424, 434, 444 of computing devices 420, 430, 440. In this regard, computing devices 420, 430, 440 may be considered client computing devices.

As shown in FIGURE 5, each client computing device 420, 430, 440 may be a personal computing device intended for use by a user 422, 432, 442, and have all of the components normally used in connection with a personal computing device including a one or more processors (e.g., a central processing unit (CPU)), memory (e.g., RAM and internal hard drives) storing data and instructions, a display such as displays 424, 434, 444 (e.g., a monitor having a screen, a touch-screen, a projector, a television, or other device that is operable to display information), and user input devices 426, 436, 446 (e.g., a mouse, keyboard, touchscreen or microphone). The client computing devices may also include a camera for recording video streams, speakers, a network interface device, and all of the components used for connecting these elements to one another.

Although the client computing devices 420, 430, and 440 may each comprise a full-sized personal computing device, they may alternatively comprise mobile computing devices capable of wirelessly exchanging data with a server over a network such as the Internet. By way of example only, client computing device 420 may be a mobile phone or a device such as a wireless-enabled PDA, a tablet PC, a wearable computing device or system, or a netbook that is capable of obtaining information via the Internet or other networks. In another example, client computing device 430 may be a wearable computing system, shown as a wristwatch as shown in FIGURE 4. As an example the user may input information using a small keyboard, a keypad, microphone, using visual signals with a camera, or a touch screen.

In some examples, client computing device 420 may be a mobile phone used by a passenger of a vehicle. In other words, user 422 may represent a passenger. In addition, client computing device 430 may represent a smart watch for a passenger of a vehicle. In other words, user 432 may represent a passenger. The client computing device 440 may represent a workstation for an operations person, for example, a remote assistance operator or someone who may provide remote assistance to a vehicle and/or a passenger. In other words, user 442 may represent a remote assistance operator. Although only a few passengers and operations persons are shown in FIGURES 4 and 5, any number of such passengers and remote assistance operators (as well as their respective client computing devices) may be included in a typical system.

As with memory 130, storage system 450 can be of any type of computerized storage capable of storing information accessible by the server computing devices 410, such as a hard-drive, memory card, ROM, RAM, DVD, CD-ROM, write-capable, and read-only memories. In addition, storage system 450 may include a distributed storage system where data is stored on a plurality of different storage devices which may be physically located at the same or different geographic locations. Storage system 450 may be connected to the computing devices via the network 460 as shown in FIGURES 4 and 5, and/or may be directly connected to or incorporated into any of the computing devices 110, 410, 420, 430, 440, etc.

Storage system 450 may store various types of information. This information may be retrieved or otherwise accessed by a server computing device, such as one or more server computing devices 410, in order to perform some or all of the features described herein.

### EXAMPLE METHODS

In addition to the operations described above and illustrated in the figures, various operations will now be described. It should be understood that the following operations do not have to be performed in the precise order described below. Rather, various steps can be handled in a different order or simultaneously, and steps may also be added or omitted.

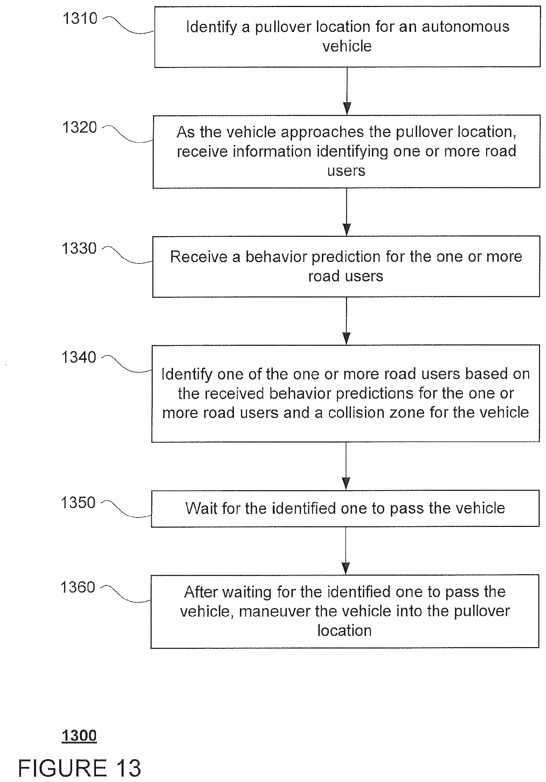

FIGURE 13 is an example flow diagram 1300 for maneuvering a vehicle having an autonomous driving mode which may be performed by one or more processors of a computing device such as the one or more processors 120 of the computing devices 110. Turning to block 1310, a pullover location for the vehicle is identified.

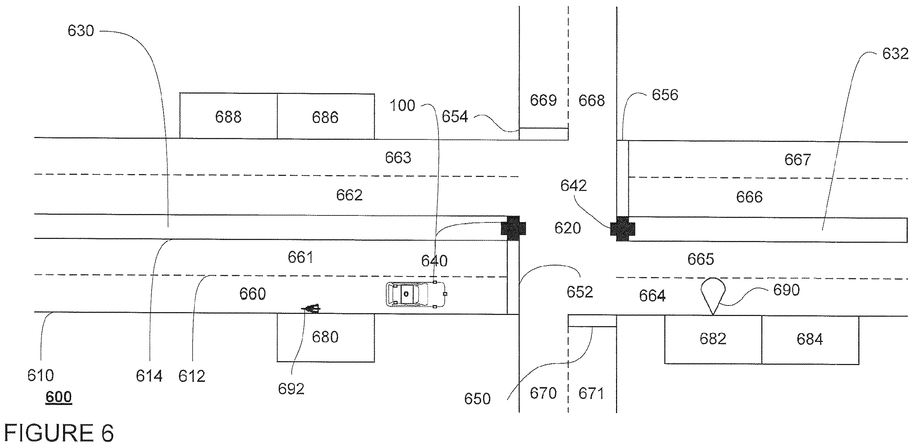

As noted above, the computing devices 110 may use the routing system to determine a route to a destination, for instance to pick up a passenger, pick up goods, drop off a passenger, and/or deliver goods. The computing devices 110 may then periodically generate trajectories for the vehicle to follow for some time and distance into the future in order to follow the route to the destination. For instance, FIGURE 6 represents an example section of roadway 600 corresponding to map information 200. In this regard, lane lines 610, 612, 614, correspond to lane lines 210, 212, 214, intersection 620 corresponds to intersection 220, median areas 630, 632 correspond to median areas 230, 232, traffic signals 640, 642 correspond to traffic signals 240, 242, stop lines 650, 652, 654, 656 correspond to stop lines 250, 252, 254, 256, lanes 660-671 correspond to lanes 260-271, and parking spots 680-688 corresponding to stopping locations 280-288.

As shown, vehicle 100 is depicted as approaching intersection 620 in lane 660 and attempting to reach a destination represented by marker 690. At this point, the computing devices 110 may begin to identify a stopping location proximate to the destination, for instance, in order to pick up a passenger at the beginning of a trip, drop off a passenger at the end of a trip, or simply park the vehicle 100 in the event of an emergency stop or temporary pullover requested by a remote assistance operator and/or for some hardware or software error.

In the example of FIGURE 6, the vehicle 100 may be approaching the destination represented by the marker 690 to pick up or drop off a passenger. In this example, parking spot 682 may be identified as both available (e.g. not occupied by another vehicle or otherwise blocked by an object) as well as proximate to the destination represented by marker 690. As such, the computing devices 110 may control the vehicle 100 in order to pull over and stop in the parking spot 682.

Returning to FIGURE 13, at block 1320, as the vehicle approaches the pullover location, information identifying one or more road users is received. As indicated above, in order to pull the vehicle over safely, the vehicle's perception system 172 may detect and identify objects including other road users such as bicyclists, people on scooters or skateboards, pedestrians, motorcyclists, other vehicles, etc. which may be approaching the vehicle. In FIGURE 6, a bicyclist 692 is approaching the vehicle 100 from behind. The vehicle's perception system 172 may detect and identify the bicyclist 692.

The computing devices 110 may determine whether the other road users are approaching the vehicle and are within a collision zone. This collision zone may be defined as an area corresponding to a two-dimensional (2D) or three-dimensional (3D) path that the vehicle would sweep through the world when following its current trajectory. For instance, the collision zone may be arranged as a rectangle or cuboid shape calculated based on the actual dimensions of the car, plus some additional area. This additional area may be defined based on the width of an open door as well as some additional buffer amount to account for the space needed for a person to exit the open door. In addition or alternatively, the collision zone may be a 2D or 3D area around the vehicle some predetermined distance from the edges or other portions of the vehicle and/or in a particular shape such as an oval.

In this regard, road users who may be approaching the vehicle 100 from in front of the vehicle or behind may be identified. As noted above, the perception system 174 may determine characteristics for each object including location, type, heading, orientation, speed, acceleration, change in acceleration, size, shape, etc. This information may be "published," that is provided by the perceptions system to other systems of the vehicle 100, including the computing devices 110, planning system 168, and behavior modeling system 176. For example, the perception system 174 may detect and identify the features and characteristics of road users such as the bicyclist 692.

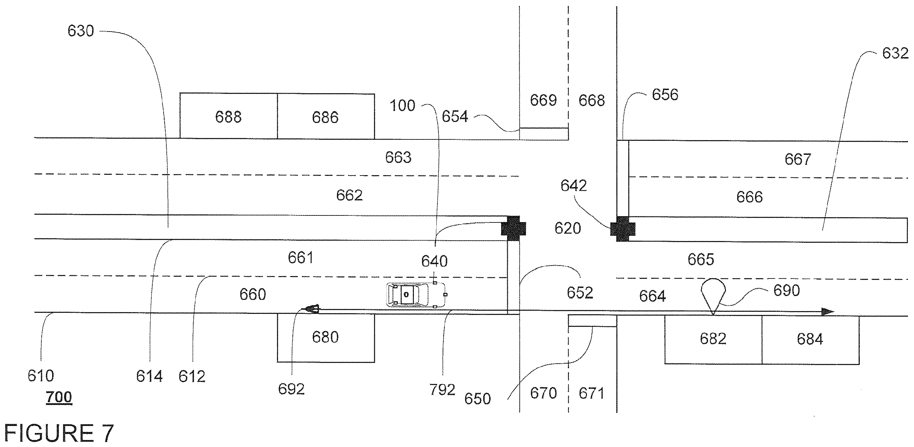

As shown in block 1330, a behavior prediction for each of the one or more road users is received. The published characteristics of these road users may be input into a behavior prediction system software module of a behavior modeling system 176. The behavior modeling system 176 may use various behavior models based on object type to output a predicted future behavior for a detected object. This predicted future behavior may include a predicted trajectory for the predicted object identifying a predicted location, heading, orientation, speed, acceleration, and change in acceleration at different points in time. In this regard, the behavior prediction mode may generate behavior predictions, or trajectories, for the bicyclist 692 (and any other detected objects corresponding to road users). Turning to example 700 of FIGURE 7, bicyclist 692 is depicted with a predicted trajectory 792 whereby the bicyclist will pass by vehicle 100. This information may also be "published," that is provided by the behavior modeling system 176 to other systems of the vehicle 100, including the computing devices 110 and planning system 168. In this regard, the computing devices 110 and/or planning system 168 may receive the predicted trajectories, including the predicted trajectory 792, from the behavior modeling system 176.

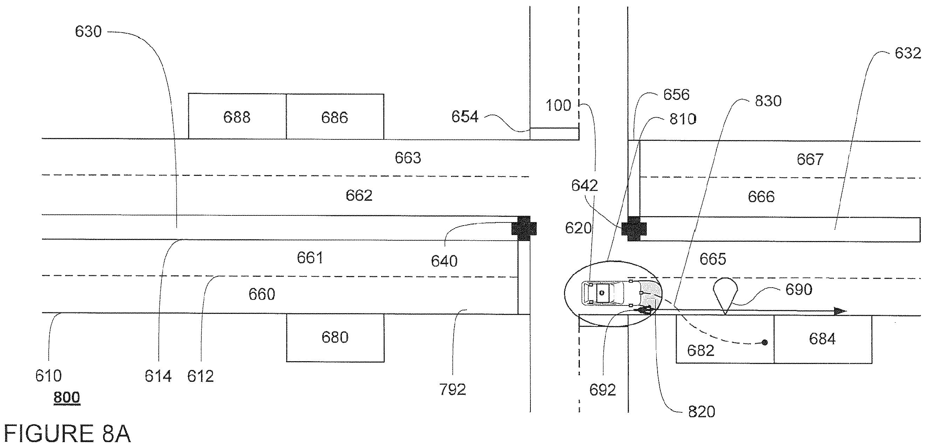

At block 1340, one of one of the one or more road users is identified based on the received behavior predictions for each of the one or more road users and a collision zone for the vehicle. In some instances, such as when the vehicle is moving or actively planning trajectories (i.e. when temporarily stopped due to traffic conditions), the computing devices 110 may also determine whether the predicted trajectories of any of the road users both enters the collision zone and intersects with an area corresponding to a two-dimensional (2D) or three-dimensional (3D) path that the vehicle would sweep through the world when following its current trajectory. Turning to example 800 of FIGURE 8A, vehicle 100 is following a route in order to pull over into parking spot 682. Before the vehicle has pulled over into parking spot 682, the bicyclist 692 is expected to enter a collision zone 810 around the vehicle and to intersect with an area 820 corresponding to a 2D or 3D path that the vehicle would sweep through the world when following its current trajectory 830. As such, the predicted trajectory 792 of bicyclist 692 will enter the collision zone 810, so the bicyclist may be identified as in block 1340. In this example, the collision zone 810 is depicted as an oval around the vehicle, though other shapes and types of collision zones may also be used as described above.

Returning to FIGURE 13, at block 1350, the vehicle waits for the identified one to pass the vehicle. This waiting may occur once the vehicle's computing devices 110 have identified a pullover location. In this regard, before the computing devices 110 have identified the pullover location, the vehicle would not necessarily wait for the identified one to pass the vehicle, thus avoiding inappropriate and unpredictable behaviors of the vehicle.

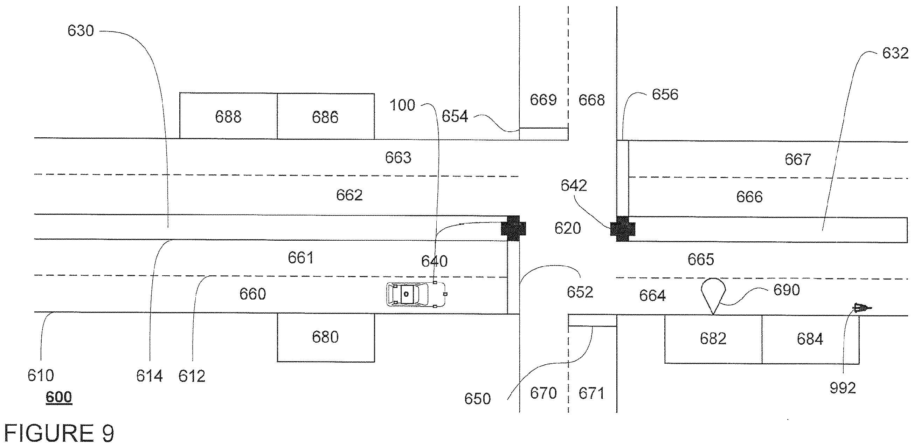

Thereafter, at block 1360, after waiting for the identified one to pass the vehicle, the vehicle is maneuvered into the pullover location. For instance, when a road user is detected approaching the vehicle and the road user's predicted trajectory is within the collision zone (and in some instances intersects with the path of the vehicle's trajectory within the collision zone), the computing devices 110 may delay pulling the vehicle over until the road user has passed the vehicle. In this regard, the computing devices 110 would wait until the bicyclist 692 passes the vehicle before pulling into the parking spot 682. Although the examples of FIGURES 6-8 depict a road user that approaches the vehicle from behind, a similar process may be employed for obj ects which are approaching the vehicle from the front, such as depicted in FIGURE 9 with bicyclist 992.

In conjunction with waiting for the road user to pass by the vehicle, information may be displayed to any passengers within the vehicle 100 in order to allow such passengers to understand the delay. For instance, information displayed on the display 152 may visually focus on any road user or road users who are detected approaching the vehicle with predicted trajectories that are within the vehicle's collision zone. For example, the road user may be displayed with a visual treatment such as a ring or oval beneath the road user, highlighted in a particular color such as pink or yellow, or any other visual characteristics that allows passengers to readily see the road user on the display. In conjunction with this, the computing devices 110 may also display a notification indicating that the vehicle 100 is waiting for a road user to pass before pulling over.

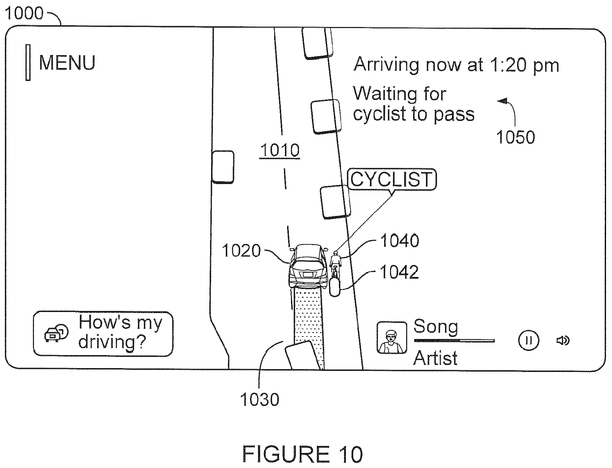

FIGURE 10 depicts a visualization 1000 including a background scene 1010, a representation 1020 of the vehicle 100, a representation of a road user 1030, and a representation of a road user 1040 which has been detected approaching the vehicle and where its predicted trajectory is within the collision zone. In this example, the road user 1040 is depicted with a visual treatment 1042 displayed in a color that allows the visual treatment 1042 to stand out from the background scene. For instance, the color of the visual treatment 1042 may be pink whereas the colors of the background scene may be comprised of black, grays and blues. In this regard, the colors of the representation of the road user 1030 may be blues and/or grays. As shown, the road user 1040 may also be provided with a "call out" indicating the type of the road user, here "cyclist" representing that the road user 1040 is a bicyclist. Other call outs may include "cyclists" (to indicate multiple bicyclists), "pedestrian", "pedestrians", etc. In addition, the visualization 1000 includes a notification 1050 that notifies the passenger that the vehicle is waiting for the road user 1040 to pass by the vehicle. In this example, the behavior prediction for the road user 1030 may indicate that his road user will stop and/or pass vehicle 100 with a wide distance between the road user 1030 and the driver door of the vehicle 100.

Once any road users who are detected approaching the vehicle and have predicted trajectories that are within the collision zone, the computing devices 110 may pull the vehicle over into the parking spot 682. Once the vehicle has come to a complete stop or for instance the vehicle is transitioned to a "park" mode (e.g. as compared to a "neutral" or "drive mode" for the vehicle's drive train), the computing devices 110 may automatically unlock and/or open one or more doors of the vehicle, such as driver-side doors 350, 352 of FIGURE 3 (or alternatively, passenger-side doors of the vehicle which are not shown).

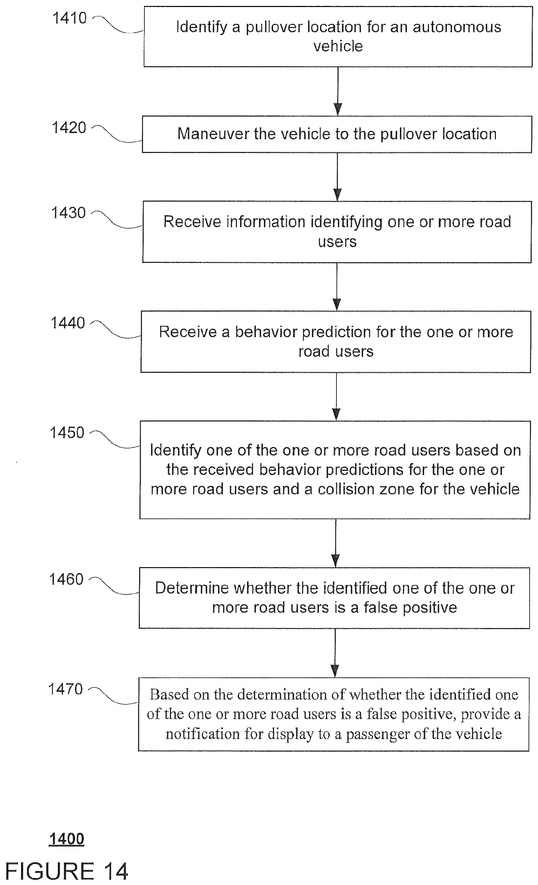

FIGURE 14 is an example flow diagram 1400 for providing notifications to a passenger of an autonomous vehicle which may be performed by one or more processors of a computing device such as the one or more processors 120 of the computing devices 110. Turning to block 1410, a pullover location for the vehicle is identified. Thereafter at block 1420, the vehicle the vehicle is maneuvered in the autonomous driving mode into the pullover location.

As noted above, the computing devices 110 may use the routing system to determine a route to a destination, for instance to pick up a passenger, pick up goods, drop off a passenger, and/or deliver goods. The computing devices 110 may then periodically generate trajectories for the vehicle to follow for some time and distance into the future in order to follow the route to the destination. For instance, as in the example above, the computing devices 110 may begin to identify a stopping location proximate to the destination, for instance, in order to pick up, drop off, or simply park the vehicle 100. Once an area is identified as both available (e.g. not occupied by another vehicle or otherwise blocked by an object) as well as proximate to the destination, the computing devices 110 may control the vehicle 100 in order to pull over and stop in the area. However, between the features of block 1410 and 1420, the vehicle's computing devices may also perform one or more of the features of block 1320, 1320, 1340, and 1350 as described above.

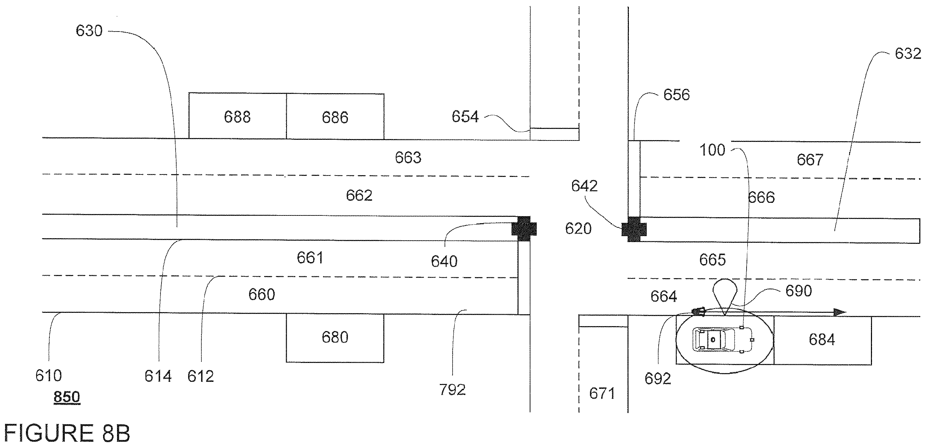

At block 1430, information identifying one or more road users is received. Of course, as the computing devices 110 begin to pull the vehicle over and eventually stop the vehicle, the perception system 172 may continue to detect and identify objects. As such, the computing devices 110 may continue to determine whether any identified road users are detected approaching the vehicle and have predicted trajectories that are within the collision zone. Turning to example 850 of FIGURE 8B, after the vehicle has pulled over into parking spot 682 (e.g. the vehicle is in the process of or has transitioned to park), the bicyclist 692 is expected to enter a collision zone 810 around the vehicle. As such, the predicted trajectory 792 of bicyclist 692 will enter the collision zone 810. If such road users are detected, such as in example 850, the computing devices 110 may delay unlocking and/or opening the vehicle's doors for a predetermined period of time or until the road users have passed the vehicle 100. Once that occurs, the computing devices 110 may unlock and/or open one or more doors of the vehicle. In conjunction with this, the computing devices 110 may display a further notification to indicate to the passenger that it is safe to exit the vehicle and/or that the trip is over.

As shown in block 1440, a behavior prediction for the one or more road users is received. As noted above, the published characteristics of these road users may be input into a behavior prediction system software module of a behavior modeling system 176. The behavior modeling system 176 may use various behavior models based on object type to output a predicted future behavior for a detected object. This predicted future behavior may include a predicted trajectory for the predicted object identifying a predicted location, heading, orientation, speed, acceleration, and change in acceleration at different points in time.

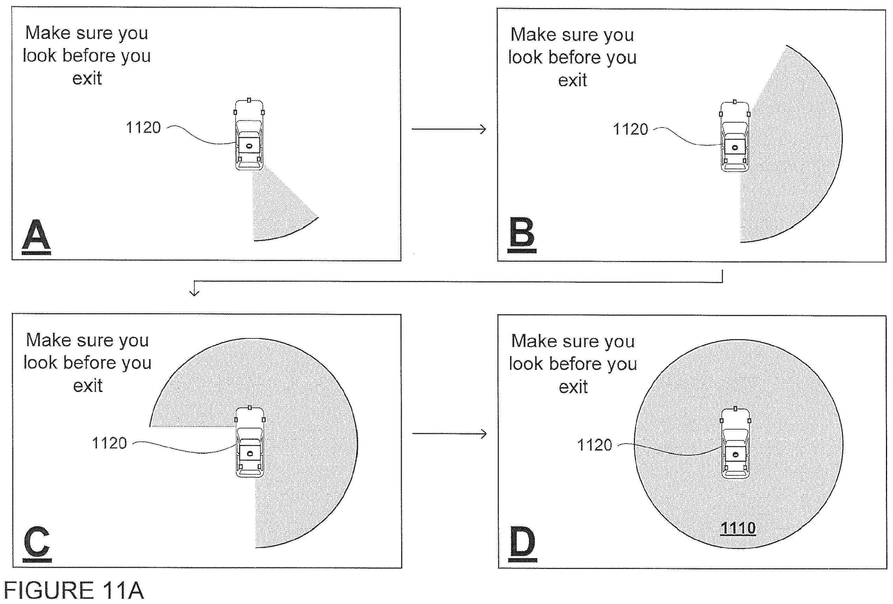

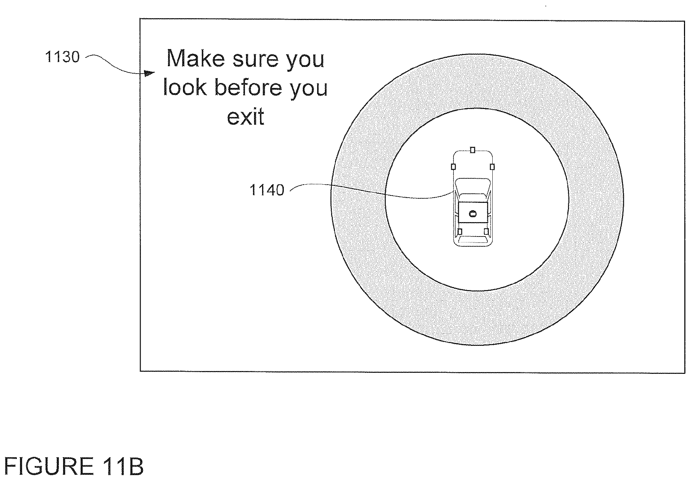

At block 1450, one of one of the one or more road users is identified based on the received behavior predictions for the one or more road users and a collision zone for the vehicle. After the vehicle has been transitioned to park and doors have been unlocked, the perception system 172 may continue to detect and identify objects. As such, the computing devices 110 may continue to determine whether any identified road users are detected approaching the vehicle and have predicted trajectories that are within the collision zone as described above. If no such road users are identified, a notification may be displayed that encourages the passenger to look around for other road users when exiting the vehicle. As an example, an animation that starts at some point around the vehicle sweeps around the vehicle may be displayed with such a notification in order to suggest that road users can be located at any point around the vehicle as the passenger exits. For example, a visualization may start from behind the vehicle and sweep a 360-degree area 1110 around the representation 1120 of the vehicle 100 as shown by the progression from A to B to C to D as shown in FIGURE 11A. As another example, a 360-degree ring 1130 or halo may extend from and be displayed around a representation 1140 of the vehicle 100 as a pulse or a static shape as shown in FIGURE 11B.

In some instances, if no such road users are identified, but the sensors of the vehicle's perception system are occluded (e.g. partially occluded by another object such as another vehicle) the notification may include an indication that the vehicle is unable to perceive objects in a certain area, that the vehicle's perception is partially occluded, and to warn the passenger that road users could be located in that area. In this regard, the notification may actually identify the source of the occlusion or the type of the object that is causing the occlusion. As an example, the notification may describe the object causing the occlusion (e.g. "We can't see around that parked car so please be careful!" or "We can't see around that delivery truck; there may be another road user nearby, so please be careful!") in order to explain to the passenger to exercise caution when exiting the vehicle as other road users may not be detected.

At block 1460, whether the identified one of the one or more road users is a false positive is determined. In some instances, the perception system 172 may detect and identify objects corresponding to a passenger who has recently left the vehicle or a pedestrian who is approaching the vehicle for another trip. In such instances, the passenger or the pedestrian may be detected as a "false positive" for a road user that may appear to be approaching the vehicle with a predicted trajectory within the collision zone. To avoid this, certain road users may be "ignored" in order to avoid incorrectly or in appropriately displaying any of the aforementioned notifications.

For instance, some pedestrians may approach a vehicle with the invention to board it. In other words, the pedestrian may actually be a passenger for the next trip the vehicle is servicing. In such instances, it may not be appropriate to display any of the aforementioned notifications. In this regard, the pedestrian may have a predicted trajectory that is within the collision zone and as such may be detected as a false positive. In such instances, the computing devices 110 may determine whether one or more requirements have been met. Such requirements may include that the pedestrian is moving at or below a predetermined speed, such as 4 miles per hour or more or less, whether the vehicle is expecting another passenger to enter the vehicle (e.g. the vehicle 100 has received information about its next trip), that the pedestrians gaze is directed towards the vehicle (e.g. via gaze detection features of the perception system 172), that the pedestrian is in a sidewalk while approaching the vehicle (as opposed to in a bicycle lane or in a lane) which may suggest that the pedestrian is more likely to be getting into the vehicle, that the pedestrian is not some other type of road user which is less likely to be a new passenger (e.g. a person on a skateboard or a moped).

In other instances, a pedestrian may suddenly appear to the perception system 172 within the collision zone once a passenger exits the vehicle. In other words, the pedestrian may actually be the current passenger for the trip the vehicle has just completed. In such instances, it may not be appropriate to display any of the aforementioned notifications. In such instances, the computing devices 110 may determine whether one or more requirements have been met. Such requirements may include that a pedestrian has suddenly appeared within the collision zone (i.e. without previously being tracked by the perception system 172) and/or that the vehicle's door is open.

At block 1470, based on the determination of whether the one of the one or more road users is a false positive, providing a notification for display to a passenger of the vehicle. If such road users are identified and not determined to be false positives, a notification may be displayed on a display of the vehicle, such as electronic display 152. The notification may indicate both that there are other road users proximate to the vehicle and also encourages the passenger to look around for other road users when exiting the vehicle. In addition or alternatively, additional visual cues, including flashing the interior lights of the car, or flashing/animating the screens, may be used to draw extra attention to the notification.

The notification may be provided with or without audible cues, such as an initial ding, chime, beep, or other audible cues to call the passenger's attention to the display and/or the road user. In some instances, the audible cues may be played from only certain speakers, for instance left or right speakers or front or rear speakers, depending on which side of the vehicle the road user is expected to approach the vehicle. These audible cues may be especially useful for passengers with impaired vision.

In some instances, the audible cues may be adjusted based upon current speed, position, past behavior, and behavior prediction for the other road user. For instance, the farther away the road user is from the vehicle, the quieter or softer the audible notification may be. Similarly, the closer the road user is to the vehicle, the higher the volume and the louder the audible notification may be.

For instance, if the other road user was previously inside the bike lane and proceeding straight, the behavior prediction may include trajectory will have a high likelihood or confidence that the other road user will continue straight inside the bike lane. In such instances, the audible cues may be louder to provide a stronger warning to the passenger. However, if the other road user had previously been swerving and entering and exiting the bike lane, the audible cues may be softer as the behavior prediction may be less confident as to whether the other road user will actually proceed near the vehicle.

In some instances, a minimum reaction time for a road user (such as a cyclist or pedestrian) may be determined based upon the current location of the road user, the current speed of that road user, as well as the distance of the road user to the collision zone. This may be used to determine the volume of the audible notification at what point the volume of the audible notification should be increased.

In some instances, the volume and timing of a notification and audible cues may also be based on the time to collision with the car, rather than only distance. In this regard, a road user such as a bicyclist is moving at 5 miles per hour that is 10 feet from the vehicle might trigger a notification with audible cues which are the same as if a bicyclist is moving at 10 miles per hour 20 feet from the car. The goal is to give the passenger within the vehicle 100 a constant minimum warning time (such as 5 seconds or more or less) regardless of how far away or fast the other road user is. By doing so, the warning may be provided timely and thus avoids warning too late, which can result in the passenger startling the other road user without giving the passenger enough time to stop opening the door and also avoids warning too early where the passenger believes that the notification and audible cue is a false positive and ignores it because the passenger is not able to view the other road user (e.g. the other road user is too far away).

Similarly, the pitch, and timing between the audio cues could also be modified based on the speed, distance, and trajectory of the other road user. For instance, when the other road user is farther away from the vehicle and/or moving at slower speeds, there may be a 2 to 3 second pause between audible cues, whereas when the other road user is closer to the vehicle and/or moving at faster speeds, there may be only a 100 to 200 millisecond pause between audible cues. In some instances, an animation that sweeps around a depiction of a vehicle may be displayed with such a notification in order to suggest that road users can be located at any point around the vehicle as the passenger exits. This thus avoids suggesting any specific directionality to the warning which may heighten the passenger's awareness of surroundings.

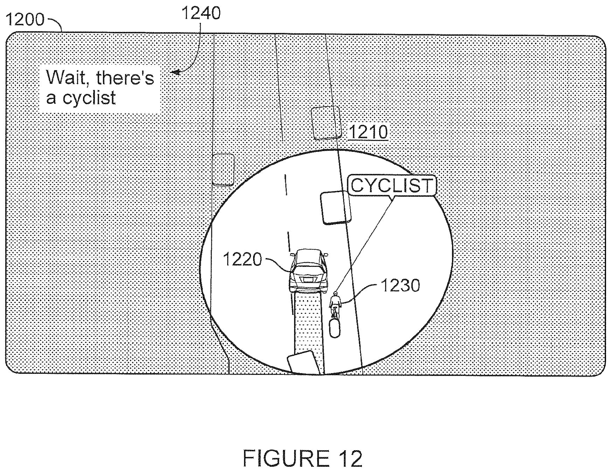

In addition or alternatively, if such road users are identified, a notification may encourage the passenger to wait before exiting the vehicle and also indicate the reason why. In such instances, other types of visual treatments may be used to focus the passenger's attention on the identified road user. For example, as shown in FIGURE 12, a visualization 1200 including a background scene 1210, a representation 1220 of the vehicle 100, and a representation 1230 of a road user which has been detected approaching the vehicle and where its predicted trajectory is within the collision zone. In this example, the "lighting" in the scene is focused around the bicyclist such that the bicyclist appears at the center of a circular bright spot and the rest of the background scene may be dark or black. FIGURE 12 also includes a notification 1240 which indicates to the passenger that there is another road user, here a "cyclist", outside of the vehicle. This notification may be purposefully simple in order to encourage the passenger to focus on the visualization 1200 and understand the orientation and proximity of the road user.

In some instances, depending upon the state of a trip different notifications may be provided. For instance, different visual and audio cues may be played when passengers are exiting a vehicle at the end of a trip as compared to a passenger who has entered a vehicle at the beginning of a new trip and opens a door of the vehicle to get out (e.g. because the passenger has forgotten something). In such instances, a virtual camera view (such as provided in the example of FIGURE 12) may be displayed with the notification. In some instances, the position of the virtual camera (e.g. directly above a representation of the vehicle or a side view) may be different as well as how the road user is highlighted.

Changing the virtual camera angle may allow for a better view of the other road user in the image. For instance, if there is a slow-moving road user near the vehicle 100, the camera could be positioned relatively close to the vehicle. However, if there is a fast-moving road user approaching the vehicle, but the road user is still very far away from the vehicle, positioning the camera relatively close to the vehicle may prevent the passenger from understanding where the road user is located relative to the vehicle. Thus, by zooming the virtual camera out so that the view can include the road user, the passenger may have better context to understand the notification.

In some instances, the virtual camera view may always be shown at a drop off as this is where such information is more relevant to the passenger (as compared to a pick up). Whereas the virtual camera view may be selectively shown during pickup when there is another road user detected as described above and/or if there is a high likelihood, high severity collision possible if the passenger were to open a door of the vehicle.

For instance, the notification may be smaller or more subtle at the beginning of a trip (at pickup) as compared to the end of a trip (at drop off) where the notification may cover all or a substantial portion of the display 152 and/or 352. In addition or alternatively, the volume of the audible notification may be higher at the end of a trip than at the beginning of a trip. Such features may therefore enable the notifications to be more readily perceived at the end of a trip, when a passenger is less likely to be aware of the vehicle's surroundings.

In the event of an emergency or other temporary stop, in addition to providing the aforementioned notifications, additional notifications may be provided. Such additional notifications may indicate that the vehicle 100 is stopped only temporarily and discouraging the passenger from exiting the vehicle for safety reasons.

Although the examples above relate to providing notifications before a vehicle has stopped or after a vehicle has stopped, in some instances, the aforementioned notifications may be provided as the vehicle is coming to a stop or after having stopped and is in the process of transitioning (e.g. shifting) into the park mode. For instance, if a road user is approaching the collision zone as the vehicle is pulling into an area to park or stopped and transitioning into the park mode, a notification may be provided before the vehicle has been shifted into the park mode in order to provide a passenger with an indication that there is a road user approaching the vehicle or that a road user may be approaching the vehicle. Similar notifications may also be provided as the vehicle is pulling into an area to park or stopped and transitioning into the park mode, in the case of occlusions or where no other road users are detected as described above.

In some instances, the vehicle may have multiple internal displays. For example, in a passenger vehicle with two or more rows of seating, there may be an internal display for each row. In such instances, the same information, including visualizations and notifications may be displayed on each of the internal displays. This may avoid confusion and allow all passengers within the vehicle to receive the same information.

In addition to the visualizations and notifications that are displayed on the displays of the vehicle, the same or similar visualizations may be displayed at the passenger's client computing device. For example, such information may be relayed to a passenger's client computing device, such as client computing device 420, via the network 460 and/or the server computing devices 410. To increase the passenger's awareness of such notifications, the notifications may be displayed on the display 424 of the client computing device 420 in conjunction with or immediately after an audible and/or haptic cue (e.g. an audible "ding", chime, or a brief vibration or pattern of vibrations). Moreover, over time, less cues or notifications may be required for individual passengers. In this regard, more cues and notifications may be provided to sensitize a passenger to the possibility of other road users being in proximity to the vehicle when the passenger is exiting a vehicle on the passenger's first trip with the transportation service than subsequent trips.

In addition to turn signals and hazard lights as discussed above, the computing devices 110 may use images and/or words on various external displays of the vehicle 100 to signify to approaching road users that a passenger is about to exit and caution should be used. In addition, external speakers on the vehicle may also be leveraged by the computing devices 110 to warn road users audibly.

In addition to ignoring false positive detections, whether or not a notification is displayed may also be contingent upon other situational factors. For instance, the notification may be provided only when the doors of the vehicle are closed. In this regard, when a door of the vehicle is open, this may indicate that another pedestrian is entering the vehicle or the passenger is in the process of getting out. In addition or alternatively, for each trip, the computing devices 110 may attempt to authenticate a passenger's client computing device before allowing the passenger to enter the vehicle. In this regard, if any of the doors of the vehicle had already been opened and closed (e.g. because the current passenger has just exited the vehicle), but the next passenger's client computing device had not yet been authenticated, the notification would not be triggered. In this regard, in some instances, the notification may be triggered only after a passenger's client computing device has been authenticated.

The features described herein may provide a useful and practical way to avoid collisions caused by vehicles pulling over and passengers exiting those vehicles. By limiting notifications to only those road users that are relevant to the collision zone, this reduces the likelihood of "oversaturation" caused by irrelevant notifications which may reduce the likelihood of passengers adhering to these notifications. As such, the notifications provided may raise the awareness of passengers as they exit the vehicle while at the same time minimizing the need for alarming or disconcerting notifications. This, in turn, may improve the perception of the transportation service by passengers who are able to trust that the vehicles are operating safely and looking out for road users.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements. The specification includes the following subject-matter, expressed in the form of clauses 1-32.
1. A method of maneuvering a vehicle having an autonomous driving mode, the method comprising:
   identifying, by one or more processors of the vehicle, a pullover location for the vehicle;
   as the vehicle approaches the pullover location, receiving, by the one or more processors of the vehicle, information identifying one or more road users;
   receiving, by the one or more processors of the vehicle, a behavior prediction for each of the one or more road users;
   identifying, by the one or more processors of the vehicle, one of the one or more road users based on the received behavior prediction for each of the one or more road users and a collision zone for the vehicle;
   waiting, by the one or more processors of the vehicle, for the identified one to pass the vehicle; and
   after waiting for the identified one to pass the vehicle, maneuvering, by the one or more processors of the vehicle, the vehicle into the pullover location in the autonomous driving mode.
2. The method of clause 1, wherein identifying the identified one of the one or more road users includes determining whether the received behavior predictions for each of the one or more road users intersects with the collision zone.
3. The method of clause 1 or 2, wherein the collision zone includes an area around the vehicle having an oval shape.
4. The method of any of clauses 1-3, further comprising, providing a notification on a display of the vehicle indicating that the vehicle is waiting for the identified one of the one or more road users to pass the vehicle.
5. The method of clause 4, further comprising, providing the notification with a visualization including a background scene, a representation of the vehicle and a representation of the identified one of the one or more road users.
6. The method of clause 5, wherein the representation of the identified one of the one or more road users is displayed with a visual treatment that allows the representation of the identified one of the one or more road users to stand out from a background scene.
7. The method of any of clauses 1-6, further comprising, after maneuvering the vehicle into the pullover location, displaying a notification on a display of the vehicle indicating that a passenger can exit the vehicle.
8. The method of any of clauses 1-7, further comprising, after the vehicle is maneuvered into the pullover location:
   receiving information identifying one or more second road users;
   receiving, by the one or more processors of the vehicle, a behavior prediction for the one or more second road users;
   identifying, by the one or more processors of the vehicle, one of the one or more second road users based on the received behavior predictions for each of the one or more second road users and the collision zone;
   waiting, by the one or more processors of the vehicle, for the identified one of the one or more second road users to pass the vehicle; and
   after waiting for the identified one of the one or more second road users to pass the vehicle, unlocking a door of the vehicle.
9. The method of clause 8, further comprising, in addition to unlocking the door, opening the door.
10. The method of any of clauses 1-7, further comprising, after the vehicle is maneuvered into the pullover location:
   receiving information identifying one or more second road users;
   receiving, by the one or more processors of the vehicle, a behavior prediction for the one or more second road users;
   identifying, by the one or more processors of the vehicle, one of the one or more second road users based on the received behavior predictions for each of the one or more second road users and the collision zone;
   waiting, by the one or more processors of the vehicle, a predetermined period of time; and
   after waiting the predetermined period of time, unlocking a door of the vehicle.
11. The method of clause 10, further comprising, in addition to unlocking the door, opening the door.
12. The method of any of clauses 1-7, further comprising, after maneuvering the vehicle into the pullover location, unlocking a door of the vehicle.
13. The method of clause 12, further comprising, after unlocking the door:
   receiving information identifying one or more second road users;
   receiving, by the one or more processors of the vehicle, a behavior prediction for the one or more second road users;
   identifying, by the one or more processors of the vehicle, one of the one or more second road users based on the received behavior predictions for each of the one or more second road users and the collision zone; and
   in response to the identifying the one of the one or more second road users, providing a notification on a display of the vehicle in order to encourage a passenger to look around for road users when exiting the vehicle.
14. The method of clause 13, wherein the notification includes an animation that sweeps 360 degrees around a representation of the vehicle.
15. The method of clause 13, wherein the notification suggests that road users can be located at any point around the vehicle as the passenger exits.
16. The method of clause 13, wherein the notification avoids suggesting any specific directionality to the passenger.
17. The method of clause 13, wherein the notification further indicates that perception of the vehicle is partially occluded by an object.
18. The method of clause 13, further comprising, determining whether the identified one of the one or more second road users is a false positive detection, and wherein providing the notification is further based on the determination of whether the identified one of the one or more second road users is a false positive detection.
19. The method of clause 12, further comprising, after unlocking the door:
   receiving information identifying one or more second road users;
   receiving, by the one or more processors of the vehicle, a behavior prediction for the one or more second road users;
   identifying, by the one or more processors of the vehicle, one of the one or more second road users based on the received behavior predictions for each of the one or more second road users and the collision zone; and
   in response to the identifying the one of the one or more second road users, providing a notification on a display of the vehicle in order to identify the one of the one or more second road users to the passenger.
20. The method of clause 19, wherein the notification includes a representation of the one of the one or more second road users with a visual treatment in order to focus attention of the passenger on the one of the one or more second road users.
21. The method of clause 20, wherein the visual treatment centers a visualization of a scene around the representation of the one of the one or more second road users.
22. The method of clause 20, wherein the visual treatment includes displaying the representation of the one of the one or more second road users within a circular bright spot.
23. A method of providing notifications to passengers of a vehicle having an autonomous driving mode, the method comprising:
   identifying, by one or more processors, a pullover location;
   maneuvering, by the one or more processors, the vehicle in the autonomous driving mode to the pullover location;
   receiving, by the one or more processors, information identifying one or more road users;
   receiving, by the one or more processors of the vehicle, a behavior prediction for each of the one or more road users;
   identifying, by the one or more processors, one of the one or more road users based on the received behavior predictions for each of the one or more road users and a collision zone for the vehicle;
   determining, by the one or more processors, whether the identification of the one of the one or more road users is a false positive; and
   based on the determination of whether the identification of the one of the one or more road users is a false positive, providing, by the one or more processors, a notification for display to a passenger of the vehicle.
24. The method of clause 23, wherein the notification is provided as the vehicle is transitioned to a park mode while stopped.
25. The method of clause 23, wherein the notification is provided after the vehicle is transitioned to a park mode while stopped.
26. The method of any of clauses 23-25, wherein the notification is provided with an audible notification, and the method further comprises determining a volume of the audible notification based on a location of the identified one of the one or more road users.
27. The method of any of clauses 23-26, wherein the notification includes an animation that sweeps 360 degrees around a representation of the vehicle.
28. The method of any of clauses 23-27, wherein the notification suggests that road users can be located at any point around the vehicle as the passenger exits.
29. The method of any of clauses 23-28, wherein the notification avoids suggesting any specific directionality to the passenger.
30. The method of any of clauses 23-29, further comprising determining a size of the notification with respect to a display based on a trip status of the vehicle, such that the size of the notification is larger at the end of a trip than at the beginning of a trip.
31. The method of any of clauses 23-29, wherein the notification is provided with an audible notification, and the method further comprises determining a volume of an audible notification based on a trip status of the vehicle, such that the volume is higher at the end of a trip than at the beginning of a trip.
32. The method of any of clauses 23-31, wherein when the vehicle is stopping temporarily, the notification may further discourage the passenger from exiting the vehicle for safety reasons.

## Claims

1. A method of maneuvering a vehicle having an autonomous driving mode, the method comprising:
identifying, by one or more processors of the vehicle, a pullover location for the vehicle;
as the vehicle approaches the pullover location, receiving, by the one or more processors of the vehicle, information identifying one or more road users;
receiving, by the one or more processors of the vehicle, a behavior prediction for each of the one or more road users;
identifying, by the one or more processors of the vehicle, one of the one or more road users based on the received behavior prediction for each of the one or more road users and a collision zone for the vehicle;
waiting, by the one or more processors of the vehicle, for the identified one to pass the vehicle; and
after waiting for the identified one to pass the vehicle, maneuvering, by the one or more processors of the vehicle, the vehicle into the pullover location in the autonomous driving mode.

2. The method of claim 1, wherein identifying the identified one of the one or more road users includes determining whether the received behavior predictions for each of the one or more road users intersects with the collision zone.

3. The method of claim 1 or 2, wherein the collision zone includes an area around the vehicle having an oval shape.

4. The method of any of claims 1-3, further comprising, providing a notification on a display of the vehicle indicating that the vehicle is waiting for the identified one of the one or more road users to pass the vehicle.

5. The method of claim 4, further comprising, providing the notification with a visualization including a background scene, a representation of the vehicle and a representation of the identified one of the one or more road users.

6. The method of any of claims 1-5, further comprising, after maneuvering the vehicle into the pullover location, displaying a notification on a display of the vehicle indicating that a passenger can exit the vehicle.

7. The method of any of claims 1-6, further comprising, after the vehicle is maneuvered into the pullover location:
receiving information identifying one or more second road users;
receiving, by the one or more processors of the vehicle, a behavior prediction for the one or more second road users;
identifying, by the one or more processors of the vehicle, one of the one or more second road users based on the received behavior predictions for each of the one or more second road users and the collision zone;
waiting, by the one or more processors of the vehicle, for the identified one of the one or more second road users to pass the vehicle; and
after waiting for the identified one of the one or more second road users to pass the vehicle, unlocking a door of the vehicle.

8. The method of claim 7, further comprising, in addition to unlocking the door, opening the door.

9. The method of any of claims 1-6, further comprising, after the vehicle is maneuvered into the pullover location:
receiving information identifying one or more second road users;
receiving, by the one or more processors of the vehicle, a behavior prediction for the one or more second road users;
identifying, by the one or more processors of the vehicle, one of the one or more second road users based on the received behavior predictions for each of the one or more second road users and the collision zone;
waiting, by the one or more processors of the vehicle, a predetermined period of time;
and
after waiting the predetermined period of time, unlocking a door of the vehicle.

10. The method of any of claims 1-6, further comprising, after maneuvering the vehicle into the pullover location, unlocking a door of the vehicle.

11. The method of claim 10, further comprising, after unlocking the door:
receiving information identifying one or more second road users;
receiving, by the one or more processors of the vehicle, a behavior prediction for the one or more second road users;
identifying, by the one or more processors of the vehicle, one of the one or more second road users based on the received behavior predictions for each of the one or more second road users and the collision zone; and
in response to the identifying the one of the one or more second road users, providing a notification on a display of the vehicle in order to encourage a passenger to look around for road users when exiting the vehicle.

12. The method of claim 11,
wherein the notification includes an animation that sweeps 360 degrees around a representation of the vehicle; or
wherein the notification suggests that road users can be located at any point around the vehicle as the passenger exits; or
wherein the notification avoids suggesting any specific directionality to the passenger; or
wherein the notification further indicates that perception of the vehicle is partially occluded by an object; or
further comprising, determining whether the identified one of the one or more second road users is a false positive detection, and wherein providing the notification is further based on the determination of whether the identified one of the one or more second road users is a false positive detection.

13. The method of claim 10, further comprising, after unlocking the door:
receiving information identifying one or more second road users;
receiving, by the one or more processors of the vehicle, a behavior prediction for the one or more second road users;
identifying, by the one or more processors of the vehicle, one of the one or more second road users based on the received behavior predictions for each of the one or more second road users and the collision zone; and
in response to the identifying the one of the one or more second road users, providing a notification on a display of the vehicle in order to identify the one of the one or more second road users to the passenger.

14. The method of claim 13, wherein the notification includes a representation of the one of the one or more second road users with a visual treatment in order to focus attention of the passenger on the one of the one or more second road users.

15. The method of claim 14,
wherein the visual treatment centers a visualization of a scene around the representation of the one of the one or more second road users; or
wherein the visual treatment includes displaying the representation of the one of the one or more second road users within a circular bright spot.
